# EUROPEAN PATENT APPLICATION

(11) **EP 3 082 235 A1**
(43) Date of publication of application: **19.10.2016**
(21) Application number: 16165696.2
(22) Date of filing: 15.04.2016
(51) Int. Cl.: H02K 15/04

(54) **ELECTRIC MACHINE HAVING A STATOR WINDING WITH RIGID BARS THAT ARE "U"-SHAPED BY MEANS OF A THREE-DIMENSIONAL FOLD**

(30) Priority: 16.04.2015 IT BO20150190
(71) Applicant: Magneti Marelli S.p.A., 20011 Corbetta (MI) (IT)
(72) Inventor: CIAMPOLINI, Franco, 40134 BOLOGNA (IT); MAGRI, Marco, 40100 BOLOGNA (IT)
(74) Representative: Maccagnan, Matteo

(57) **Abstract**

Electric machine (1) provided with: a stator (5) having a magnetic core (6) longitudinally crossed by a plurality of stator slots (7); and a stator winding (8) having a series of rigid bars (9), which are "U"-shaped and are inserted through the stator slots (7) thus defining an inlet side (12), in which the cusps (11) of the "U"-shaped bars (9) are arranged, and an outlet side (13), in which the legs (10) of the "U"-shaped bars (9) are arranged; the cusp (11) of each "U"-shaped bar (9) has a three-dimensional fold that follows a first plane (A), which is substantially parallel to the plane defined by the "U"-shaped bar (9) and is "S"-shaped, and a second plane (B), which is substantially perpendicular to the plane defined by the "U"-shaped bar (9) and is "U"-shaped.

## Description

### TECHNICAL FIELD

The present invention relates to an electric machine having a stator winding with rigid bars that are "U"-shaped by means of a three-dimensional fold.

### PRIOR ART

The patent application EP2437378A1 describes an electric machine having a stator winding with rigid bars. A stator winding made by means of rigid bars uses a series of rigid bars which are initially "U"-shaped and are then axially inserted into the stator slots forming an inlet side, in which the cusps of the "U"-shaped bars are arranged, and an outlet side, in which the legs (namely, the straight portions) of the "U"-shaped bars are arranged. Once inserted the bars in the stator slots, the legs in the outlet side are folded and then the free ends of the legs are connected by welding to form the electric paths of the stator winding.

One of the main factors determining the overall cost of the electric machine is the amount of copper used to make the stator winding; consequently, in order to contain the overall cost of the electric machine, though getting the same performance, it is critical to minimize the amount of copper on the outside of the stator slots (in fact, the copper on the outside of the stator slots is necessary for the circulation of electricity in the stator winding, but is completely useless for creating the mechanical torque of the shaft).

Furthermore, it is essential to ensure the reliability in time of the stator winding, i.e. to avoid that after a short period of use short circuits occur between the phases and/or with respect to the electrical ground.

### DESCRIPTION OF THE INVENTION

The object of the present invention is to provide an electric machine having a stator winding with "U"-shaped rigid bars by means of a three-dimensional fold, the electric machine being of simple and economic realization and, at the same time, having a high reliability.

The present invention provides an electric machine having a stator winding with "U"-shaped rigid bars by means of a three-dimensional fold, as claimed by the appended claims.

### BRIEF DESCRIPTION OF THE DRAWINGS

The present invention will now be described with reference to the attached drawings, which illustrate a non-limiting embodiment, in which:
- Figure 1 is a schematic view in cross section, with parts removed for clarity's sake, of an electric machine according to the present invention;
- Figure 2 is a schematic perspective view, with parts removed for clarity's sake, of a stator of the electric machine of Figure 1;
- Figure 3 is a perspective and schematic view of a "U"-shaped rigid bar forming part of a stator winding of the stator of Figure 2;
- Figures 4 and 5 are two different perspective views on an enlarged scale of a cusp of the rigid bar of Figure 3;
- Figure 6 is a perspective view, showing in evidence the folding planes of a cusp of the rigid bar of Figure 3;
- Figure 7 is a perspective view of an inlet side of the stator of Figure 2;
- Figure 8 is a perspective view of the stator of Figure 2 during the construction of the stator winding;
- Figures 9 and 10 are two enlarged views of respective details of Figure 8;
- Figure 11 is a schematic view showing the "Z"-shaped fold of corresponding legs of two different "U"-shaped bars of the stator winding;
- Figure 12 is a further perspective view of a part of the stator of Figure 2 during the construction of the stator winding;
- Figure 13 is a perspective view of a support element coupled to connecting bridges of the stator winding;
- Figure 14 is a perspective and exploded view of the support element of Figure 13;
- Figures 15-18 are further perspective views of a part of the stator of Figure 2 during the construction of the stator winding;
- Figure 19 is a schematic view of a welding station used during the construction of the stator winding; and
- Figures 20-25 are six schematic views showings stages of the welding of two adjacent legs of the stator winding.

### PREFERRED EMBODIMENTS OF THE INVENTION

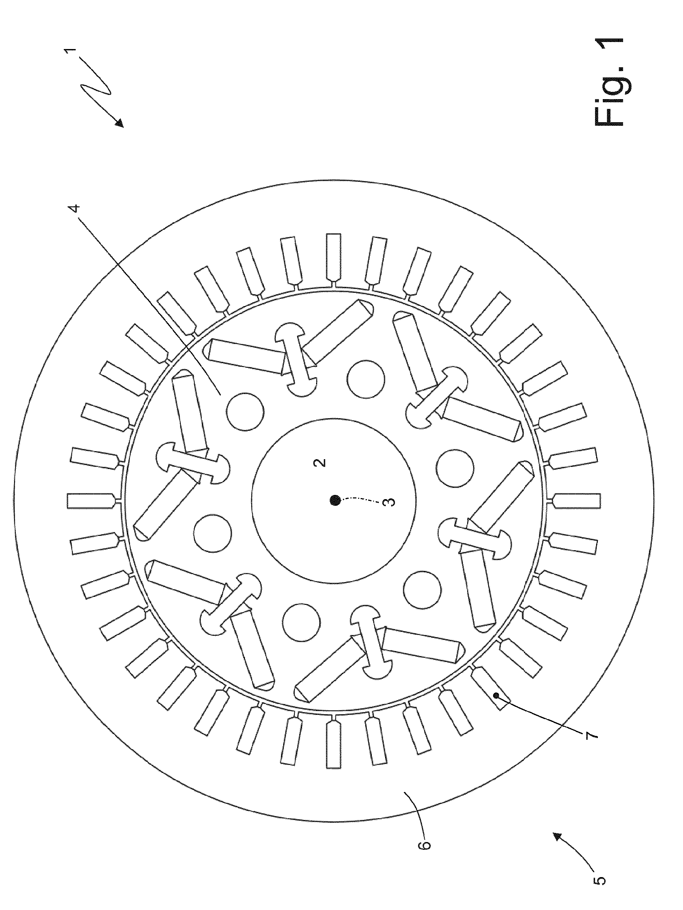

In Figure 1, number 1 indicates as a whole a synchronous automotive electric machine of the reversible type (namely which can function both as an electric motor by absorbing electric energy and generating a mechanical driving torque, and as electric generator by absorbing mechanical energy and generating electric energy). The electric machine 1 comprises a shaft 2, which is rotatably mounted to rotate about a central axis of rotation 3, a rotor 4 with permanent magnets keyed on the shaft 2 to rotate together with the shaft 2, and a cylindrical tubular stator 5 arranged around the rotor 4 to enclose inside it the rotor 4.

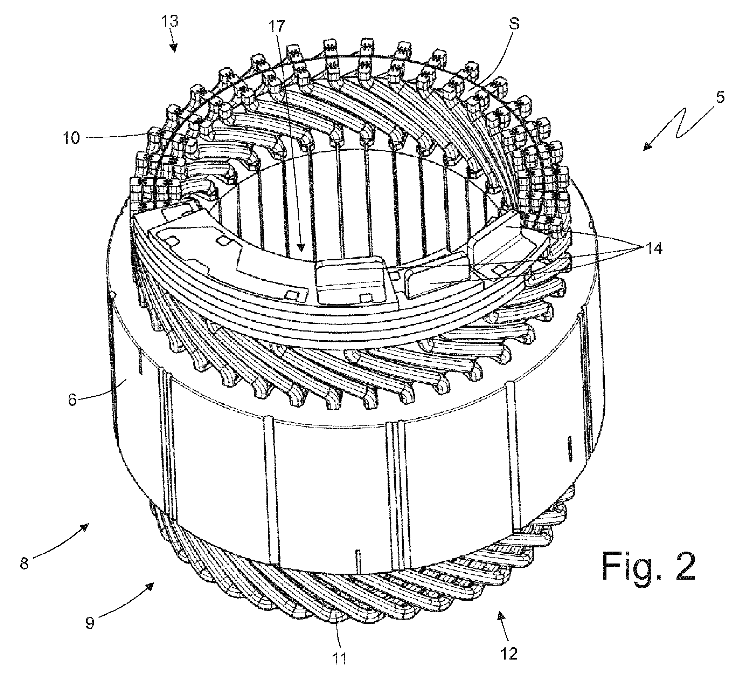

The stator 5 comprises a magnetic core 6 which is formed by a series of closely packed metal plates and has a centrally perforated tubular shape; the magnetic core 6 is longitudinally crossed by thirty-six stator slots 7 which are evenly distributed along the inner side of the magnetic core 6 and house a three-phase stator winding 8 (shown in Figure 2); obviously the number of stator slots 7 may be different (for example, forty-eight or seventy-two stator slots 7). In the embodiment shown in the attached figures, the three-phase stator winding 8 is distributed into thirty-six stator slots 7 and the permanent magnet rotor 4 comprises six poles; consequently, the synchronous electric machine 1 has two slots per pole and per phase.

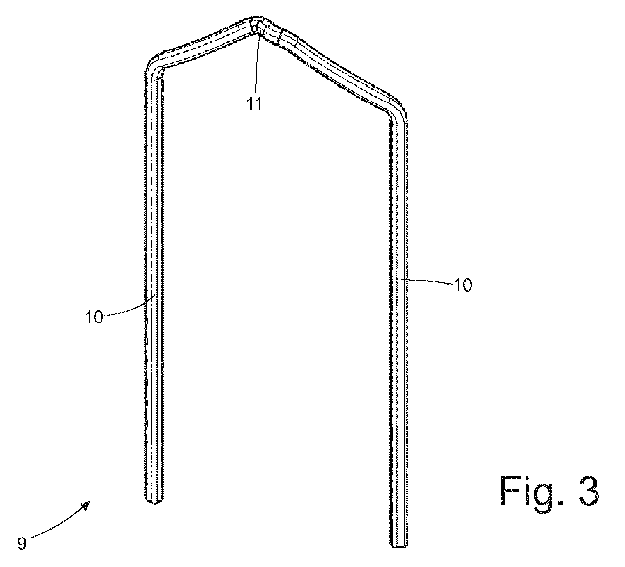

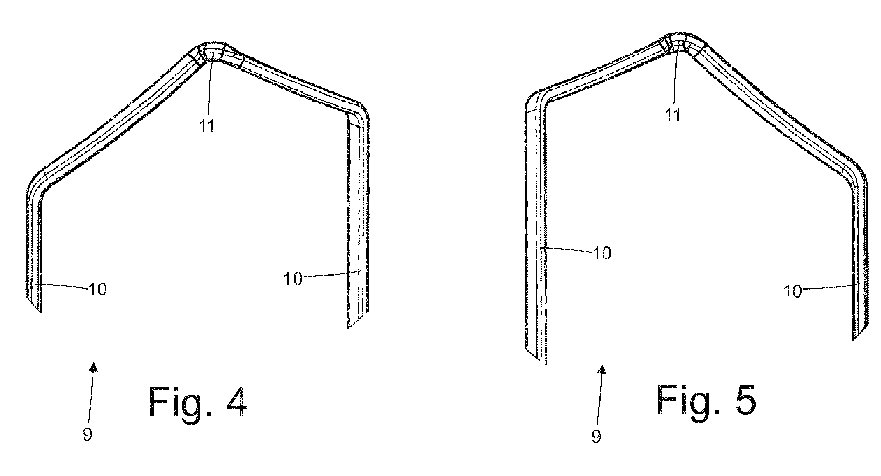

According to what shown in Figure 2, the three-phase stator winding 8 includes a series of "U"-shaped rigid bars 9, each of which includes two legs 10 connected by a cusp 11 (as best shown in Figures 3, 4 and 5); the two legs 10 of a same bar 9 constitute two corresponding conductors of the stator winding 8.

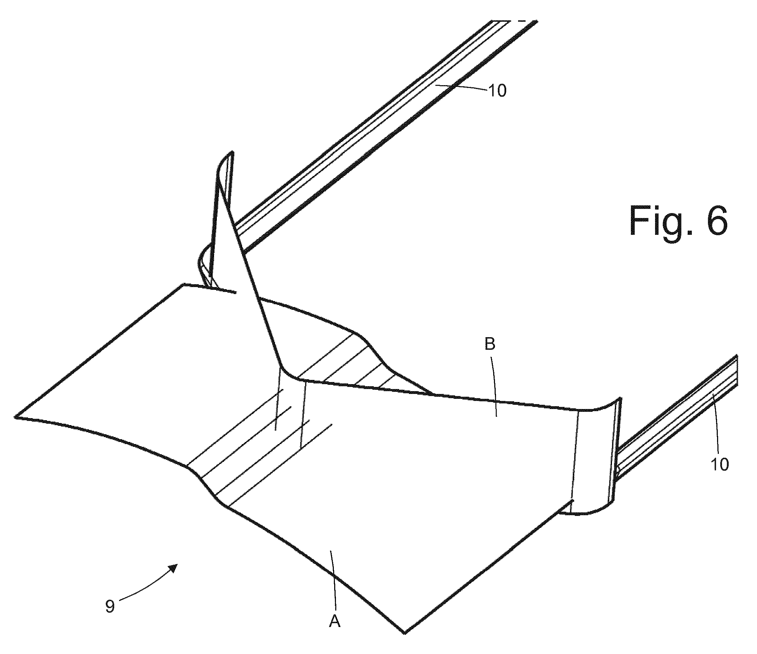

As best shown in Figure 6, the cusp 11 of each "U"-shaped bar has a "three-dimensional" fold, namely, it has a fold in two perpendicular planes A and B. In particular, the cusp 11 of each "U"-shaped bar 9 has a fold that follows the plane A, which is substantially parallel to the lying plane defined by the "U"-shaped bar 9 and is "S"-shaped; moreover, the cusp 11 of each "U"-shaped bar 9 has a further fold that follows the plane B, which is substantially perpendicular to the lying plane defined by the "U"-shaped bar 9 (namely, substantially perpendicular to the plane A) and is "U"-shaped.

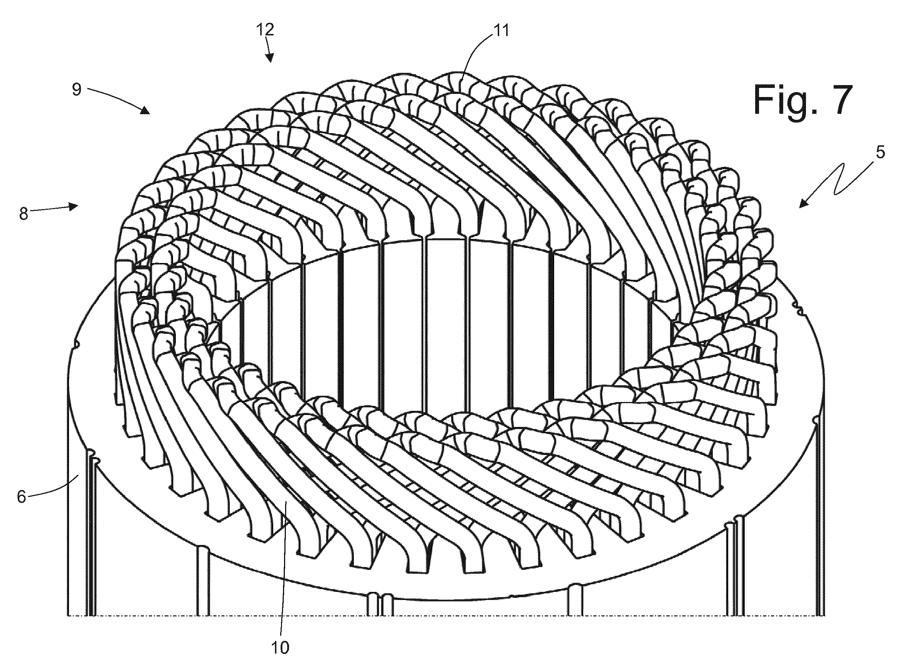

As clearly shown in Figure 6, the plane A is laterally composed by two cylindrical surface portions, which are centred on the axis of rotation 3 of the central electric machine 1 and have slightly different radii (as a leg 10 of the "U"-shaped bar 9 is inserted into a stator slot 7 in the innermost position, i.e. in correspondence of a smaller radius, whereas the other leg 10 of the "U"-shaped bar 9 is inserted in a stator slot 7 in an outermost position, i.e. in correspondence of a larger radius); moreover, in the plane A, the two laterally arranged cylindrical surface portions are centrally connected by a "S"-shaped central portion. As clearly shown in Figure 6, the plane B has a "U"-shape imparting the "U"-shape to the corresponding bar 9. The "S"-shaped fold along the plane A imparts to the corresponding bar 9 the required shape to insert the two legs 10 into the corresponding stator slots 7 in different positions (an innermost and an outermost position), and to arrange the cusps 11 of all the "U"-shaped bars 9 side by side without any mutual mechanical interference (as shown in Figure 7). In each "U"-shaped bar 9 the two legs 10 are mutually inclined (i.e. the two legs 10 form between them an acute angle) and each leg 10 is oriented so as to "face" the central axis of rotation 3 of the electric machine 1.

Thanks to the above described conformation of the "U"-shaped bars 9, the whole stator winding 8 may be manufactured by folding the bars 9 in correspondence of the cusps 11 in a single folding step before inserting the bars 9 into the corresponding stator slots 7; in other words, once that the "U"-shaped bars 9 have been inserted into the corresponding stator slots 7, the cusps 11 are subjected to no further folding. Furthermore, thanks to the above described conformation of the "U"-shaped bars 9, the "U"-shaped bars 9 may be quite easily (i.e. with little effort) inserted into the corresponding stator slots 7, because any mechanical interference between the "U"-shaped bars 9 that would cause a forced insertion (namely, pushing with force) to slightly deform the "U"-shaped bars 9 is entirely avoided; in this way, the construction of the stator winding 8 is easy and quick and, above all, any risk of damage to the outer insulation of the "U"-shaped bars 9 is avoided.

Thanks to the above described conformation of the "U"-shaped bars 9 it is possible to reduce the length (and therefore the overall weight) of the cusps 11, namely it is possible to reduce the amount of copper outside the stator slots 7 (the copper 7 outside the stator slots is necessary to the circulation of electric current in the stator winding 8 but is completely useless for creating the mechanical torque of the shaft 2). In other words, the above described conformation of the "U"-shaped bars 9 optimizes (minimizes) the length (and therefore the overall weight) of the cusps 11.

Finally, the above described conformation of the "U"-shaped bars 9 avoids a longitudinal twisting (namely around a torsion axis parallel to the central longitudinal axis of the bar 9) of each bar 9, thus preserving the integrity of the insulating enamel that surrounds the bar 9. In other words, the insulating enamel surrounding each bar 9 can be deformed without damage when the bar 9 is folded, but, on the contrary, the insulating enamel surrounding each bar 9 tends to be damaged (locally losing the electrical insulation) by deformations induced by longitudinal torsions. Therefore, being able to fold each "U"-shaped bar 9 (i.e. to form the corresponding cusp 11) without longitudinally twisting the bar 9 is very important, because it significantly contributes to maintaining intact the insulating enamel to the advantage of the reliability in time of the stator winding 8.

As shown in Figure 2, the "U"-shaped bars 9 are inserted through the stator slots 7 thus defining an inlet side 12 in which the cusps 11 of the "U"-shaped bars 9 are arranged and an outlet side 13 in which the legs 10 of the "U"-shaped bars 9 are arranged. In particular, each slot houses four legs 10 (namely, four stator winding conductors 8) belonging to four different corresponding "U"-shaped rigid bars 9. The ends of the legs 10 of the "U"-shaped bars 9 are mutually electrically connected (welded) to form the electric paths of the stator winding 8.

As shown in Figure 2, the three-phase stator winding 8 includes three power terminals 14 which constitute the electrical interface with the outside of the stator winding 8 and are electrically connected to an electronic power converter (not shown) that drives the synchronous electric machine 1.

According to a preferred (but not limiting) embodiment shown in Figure 2, between the two inner and the two outer circles of legs 10 protruding from the outlet side 13 of the magnetic core 6 of the stator it is interposed an annular insulating layer S made of an electrically insulating material (typically insulating paper "Nomex®"). Alternatively, three annular insulating layers S made of electrically insulating material may be interposed among the four circles of legs 10, or the annular insulating layers S made of electrically insulating material might even not be present.

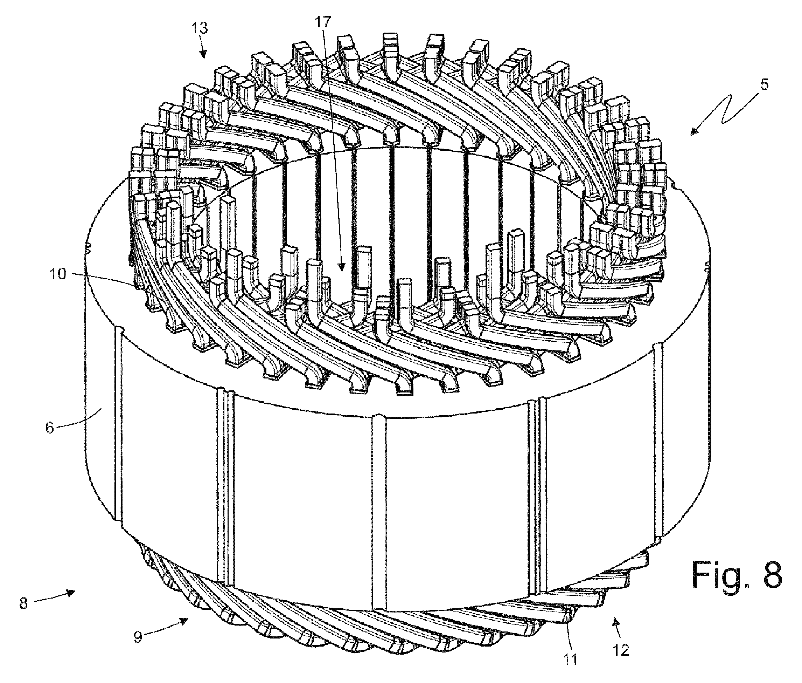

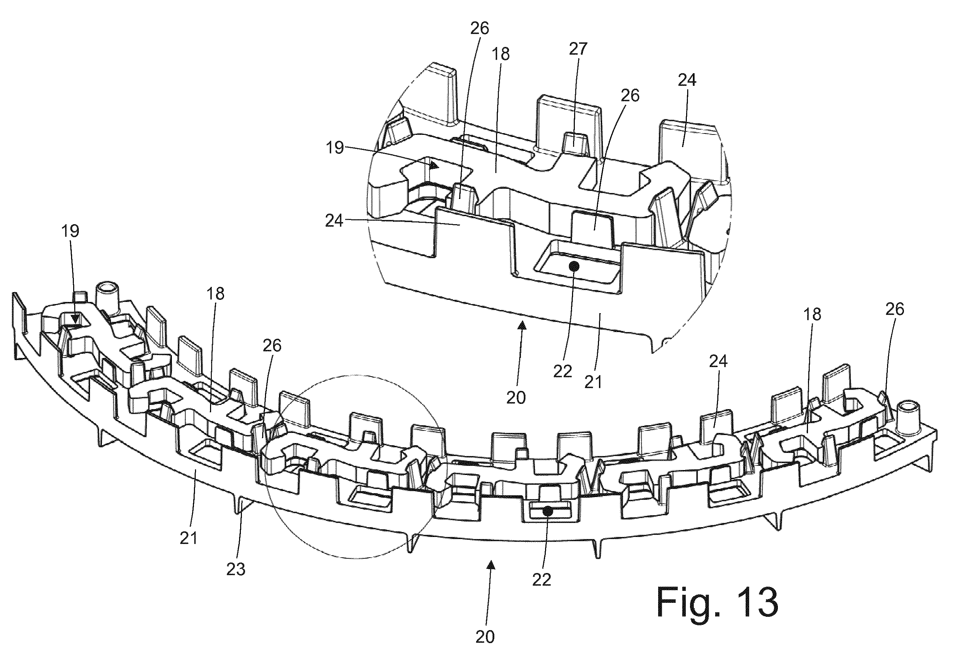

With reference to Figures 8-18, the construction mode of the stator winding 8 is described below.

First (and as previously described), the bars 9 are centrally folded to 180° to be "U"-shaped and take the shape shown in Figures 3-6. This folding is preferably carried out by means of an electronic controlled machine tool that gives each bar 9 the final form in a single operation. The cusps 11 of the "U"-shaped bars 9 are shaped to have all the same gap between them (corresponding to six stator slots 7 in the embodiment shown in the attached figures); in other words, between two legs 10 of a same "U"-shaped bar 9 there is always a gap of six stator slots 7. Furthermore, the legs 10 of the "U"-shaped bars 9 may all have the same length, or may have different lengths (namely, the legs 10 of some "U"-shaped bars 9 are slightly longer or shorter than the legs 10 of other "U"-shaped bars 9); the solution where the legs 10 of the "U"-shaped bars 9 have all the same length involves a greater consumption of copper but is easier to manage, and therefore is normally preferred for reduced production volumes.

Once the "U"-shaped bars 9 are ready (in particular, in the stator winding 8 shown in the attached figures there are seventy-two "U"-shaped bars 9), each "U"-shaped bar 9 is inserted individually (i.e. alone) in the corresponding two stator slots 7 (i.e. the two legs 10 of the "U"-shaped bar 9 are axially inserted into the corresponding two stator slots 7). In other words, a single "U"-shaped bar 9 at a time is inserted into two non-adjacent stator slots 7. Preferably, before inserting the "U"-shaped bars 9 into the stator slots 7, each stator slot 7 is internally "coated" by an insulating layer (not shown) of electrically insulating material (typically insulating paper "Nomex®"). Once that all the seventy-two "U"-shaped bars 9 have been inserted into the stator slots 7, the corresponding legs 10 protruding from the outlet side 13 of the magnetic core 6 are folded by means of respective double folds to take a "Z" shape, as shown in Figure 8. Alternatively, it is initially inserted only a part (typically a half) of the "U"-shaped bars 9, and once that this part of the "U"-shaped bars 9 has been inserted, the corresponding legs 10 protruding from the outlet side 13 of the magnetic core 6 are folded by respective double folds to take a "Z" shape; successively also the remaining part (normally the remaining half) of the "U"-shaped bars 9 is inserted, and once that the remaining part of the "U"-shaped bars 9 has been inserted, the corresponding legs 10 protruding from the outlet side 13 of the magnetic core 6 are folded by respective double folds to take a "Z" shape.

According to a preferred embodiment, during the folding of the legs 10 of the "U"-shaped bars 9, the legs 10 are not folded all together, but are folded in groups; in other words, the legs 10 of the "U"-shaped bars 9 are divided into at least two groups that are folded with two successive operations (namely, not simultaneous). During the folding of a first group of legs 10, the legs 10 of the second group that will be folded afterwards are temporarily axially shifted along the stator slots 7 to reduce the length protruding from the stator slots 7 in the outlet side 13 (typically up to cancelling or almost cancelling the length of the legs 10 protruding from the stator slots 7 in the outlet side 13). In this way, the legs 10 of the second group are not an obstacle to the folding of the legs 10 of the first group, but at the same time the legs 10 of the second group engage the stator slots 7 to keep the legs 10 of the first group still during the folding. At the end of the folding of the first group of legs 10, the legs 10 of the second group are axially shifted in the opposite direction to return to the original position, and then be folded in turn. In this way, the folding of the legs 10 of the first group is simplified, as such folding takes place without the obstacle represented by the legs 10 of the second group. The folding of the legs 10 of the second group is however easier, since it occurs when the legs 10 of the first group have already been folded and therefore have a reduced axial dimension.

Once completed the folding of the legs 10 that protrude from the outlet side 13 of the magnetic core 6, and only if necessary, some legs 10 are cut (or blunt) to give them the desired length.

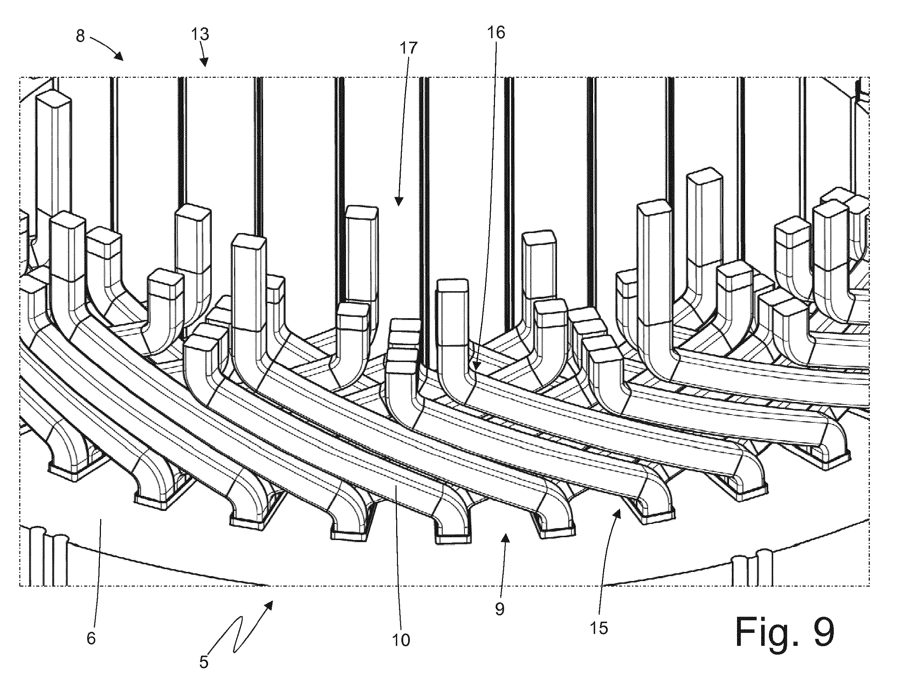

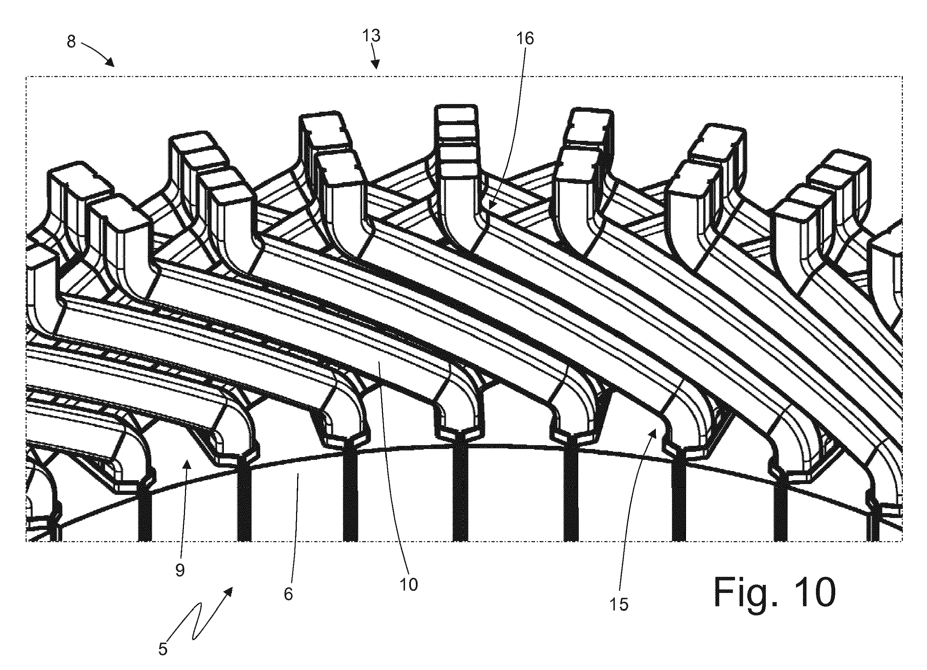

As best shown in the enlargements of Figures 9 and 10, each double fold of a leg 10 comprises an internal folding 15 (i.e. closer to the magnetic core 6 of the stator 5) in one direction and an external folding 16 (i.e. farther from the magnetic core 6 of the stator 5) in an opposite direction. By way of example, for each leg 10 the internal folding 15 has a width of about 60° in one direction and the internal folding 15 has a width of about 60° in the opposite direction. Each stator slot 7 houses four corresponding legs 10 (belonging to four different corresponding "U"-shaped bars) that are folded in alternately opposite ways by means of respective "Z"-shaped double folds. In other words, half of the legs 10 is folded in a clockwise direction with a given width, whereas the other half of the legs 10 is folded in a counterclockwise direction (i.e. in the opposite direction) with the same width.

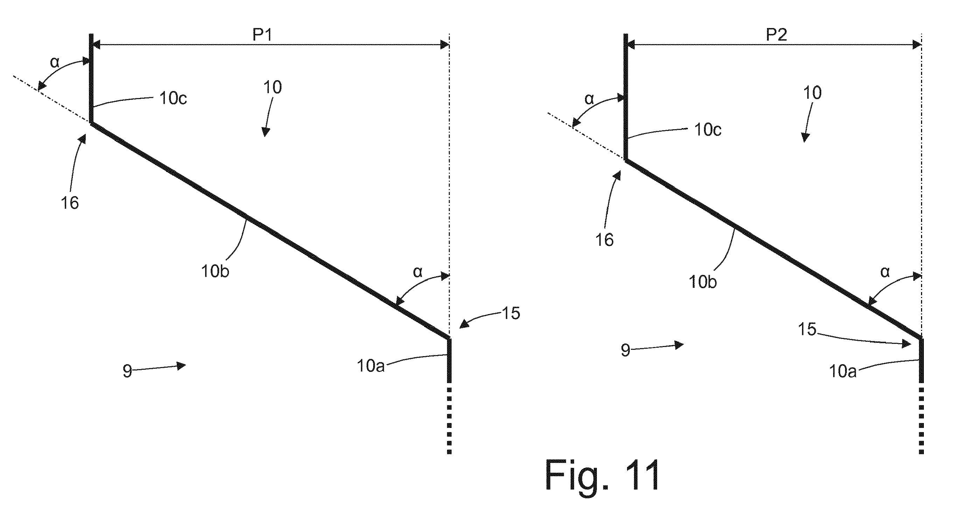

As shown in Figure 11, after the "Z"-shaped double fold, each leg 10 has an axially oriented initial portion 10a (namely, parallel to the axis of rotation 3 of the electric machine 1 and therefore parallel to the stator slots 7), an intermediate inclined portion 10b and an end portion 10c which is again axially oriented; the intermediate portion 10b connects the initial portion 10a and the end portion 10c which are parallel. In each leg 10, the intermediate portion 10b is inclined by the same angle α (in the embodiment shown about 60°) with respect to both the initial portion 10a and the end portion 10c; in other words, starting from the straight leg 10, the leg 10 is initially folded at the base of the angle α to form the internal folding 15 (between the initial portion 10a and the intermediate portion 10b) and the leg 10 is subsequently folded at the top of the angle α to form the external fold 16 (between the intermediate portion 10b and the end portion 10c).

In each leg 10 and due to the "Z"-shaped double fold, the initial portion 10a and the end portion 10c are parallel (namely, both axially oriented) and spaced apart with a step that can take a higher value P1 or a lower value P2 (in the embodiment shown in the attached figures, the step P1 corresponds to the distance between three stator slots 7, whereas the step P2 corresponds to the distance between two and a half stator slots 7). To make a difference between the step P1 and the step P2, the folding angle α does not change (in fact all the legs 10 are always folded at the same angle α to form the double folds), but the extension of the intermediate portion 10b changes (and consequently also the end portion 10c has a different length); in other words, a longer intermediate portion 10b is used to obtain the longer step P1, whereas for the shorter step P2 it is used a shorter intermediate portion 10b, while maintaining the same folding angle α to form the double folds.

As previously mentioned, the gap of slots is the same for all the "U"-shaped bars 9, i.e. all the "U"-shaped bars 9 comprise between their legs 10 a gap of six stator slots 7; consequently, to make the electric paths of the stator winding 8 it is necessary that the legs 10 of the "U"-shaped bars 9 have differences in the "Z"-shaped double folds: as previously described with reference to Figure 11, most of the legs 10 of the "U"-shaped bars 9 have a standard "Z"-shaped double fold that provides the step P1 (corresponding to the distance between three stator slots 7) and a limited part of the legs 10 of the "U"-shaped bars 9 has a shortened "Z"-shaped double fold that provides the step P2 (corresponding to the distance between two and a half stator slots 7). As an alternative to the shortened "Z"-shaped double fold that provides the step P2 (corresponding to the distance between two and a half stator slots 7), it may be used an extended "Z"-shaped double fold which provides a step corresponding to the distance between three and a half stator slots 7).

As shown in Figure 8, the legs 10 of the "U"-shaped bars 9 having the shortened "Z"-shaped double fold (step P2) are concentrated in a connecting sector 17 of the stator winding 8 that has an extension of about a quarter of the whole stator winding 8 and where the power terminals 14 are also arranged.

Once folded the legs 10 of the "U"-shaped bars 9, the upper ends of the legs 10 of the "U"-shaped bars 9 are electrically connected (by means of laser welding, carried out as it will be better explained below) to provide the electric paths of the stator winding 8.

At the connecting sector 17 of the stator winding 8, some legs 10 have longer (larger) ends 10c to make some connections of the stator winding 8 as described below.

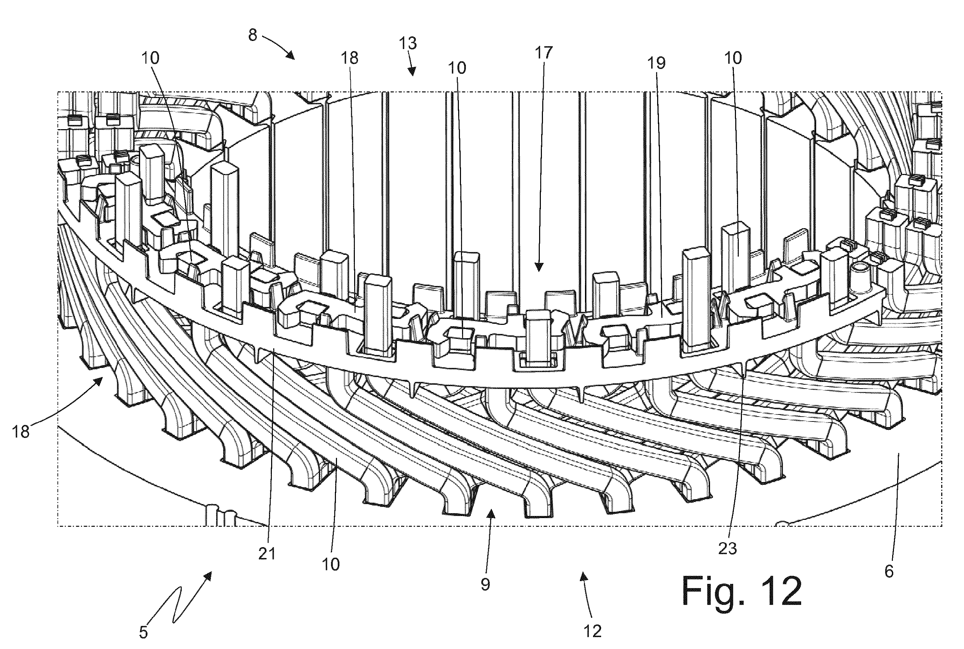

As shown in Figure 12, to create the electric paths of the stator winding 8 in the part of the stator winding 8 of each phase, the ends of at least a pair of not adjacent (then not directly weldable) legs 10 are electrically connected by a connecting bridge 18. As shown in Figure 12, in the stator winding 8 shown in the enclosed figures, each phase includes two corresponding connecting bridges 18, and then the stator winding 8 is provided with a total of six connecting bridges 18. According to a preferred embodiment, each connecting bridge 18 is formed by a flat plate, which is perpendicular to the central axis of rotation 3 of the electric machine 1 and has two opposite seats 19 engaging the ends of the respective legs 10. Once that the ends of the legs 10 have been coupled to the corresponding connecting bridges 18, a laser welding is carried out between the end of each leg 10 and the corresponding connecting bridge 18 (as better described below). According to a preferred embodiment shown in Figures 12, 13 and 14, each connecting bridge 18 comprises seats 19, each of which is "U"-shaped and can receive and house the ends of a corresponding leg 10. Each seat 19 initially has a cross section larger than the cross section of the corresponding leg 10, so that the leg 10 can be inserted with some clearance in the seat 19; in other words, each seat 19 is initially larger than the corresponding leg 10 to house with some clearance the leg 10 and thus allow a smooth entry of the end of the leg 10. Once the end of a leg 10 has been inserted into a corresponding seat 19 of a connecting bridge 18, the seat 19 is tightened by plastic deformation to tighten the leg 10 (namely to adhere firmly to the leg 10); in particular, by means of a special tool, the seat 19 is deformed against the leg 10 to be in close contact (even with a certain pressure) with the leg 10.

In this way, on the one hand the ends of the legs 10 can be easily inserted in the corresponding seats 19 and on the other hand a stable, crackless mechanical coupling is guaranteed between the ends of the legs 10 and the corresponding seats 19 to ensure a subsequent perfect welding between the ends of the legs 10 and the corresponding seats 19. In other words, thanks to the fact that the seats 19 of each connecting bridge 18 are initially larger than the corresponding legs 10, coupling the connecting bridge 18 to the stator winding 8 is easy and fast (thus easily automatable); moreover, thanks to the fact that the seats 19 of each connecting bridge 18 are plastically deformed to tighten the corresponding legs 10, it is always possible to obtain an optimal contact (mechanical and therefore electrical) between the connecting bridge 18 and the corresponding legs 10.

To allow an easy deformation of the seats 19 around the ends of the corresponding legs 10, the connecting bridge 18 is formed by a central body having a substantially constant cross section and by a number of protrusions which project from the central body and are perpendicular to the central body; each seat 19 is posteriorly delimited by the central body and is laterally delimited by a pair of opposite protrusions. Preferably, in each seat 19 a protrusion has a linear development (namely, a linear shape in plan view) and the other protrusion has an "L"-shaped development (that is, an "L"-shaped plan view); in this way, the protrusion having an "L"-shaped development can enclose on two sides the end of the corresponding leg 10. Initially (i.e. before inserting the end of the corresponding leg 10) a protrusion (in the embodiments shown in the enclosed figures, the linear protrusion) forms with the central body a right angle (that is, an angle of 90°), while the other protrusion (in the embodiments shown in the enclosed figures, the "L"-shaped protrusion) forms with the central body an obtuse angle (i.e. an angle greater than 90°); the deformation of each seat 19 essentially (but not exclusively) involves the protrusion which initially forms with the central body an obtuse angle. In other words, the protrusion which initially forms with the central body an obtuse angle has larger deformation limits, because before the deformation it is slightly farther from the end of the corresponding leg 10 relative to the other protrusion which initially forms with the central body a right angle.

Normally, the electrical connection between two adjacent ends of two legs 10 occurs between two legs 10 whose distance corresponds to six stator slots 7 (namely, with a gap of six stator slots 7 obtained by the standard "Z"-shaped double fold which provides the three-slot step P1); furthermore, at every complete revolution of the stator magnetic core 6 it is required a gap of five stator slots 7 (obtained by the shortened "Z"-shaped double fold which provides the two-slots-and-a-half step P2) or a gap of seven stator slots 7 (obtained by means of the connecting bridges 18) in order to follow the electric paths of the stator winding 8.

A preferred embodiment shown in Figures 12-15 provides an insulating support 20, which houses the connecting bridges 18 and is arranged below the connecting bridges 18. According to a preferred embodiment, the insulating support 20 is made of moulded plastic material that is electrically insulating. The insulating support 20 comprises a base 21 that is shaped like a circular arc and has a lower surface resting on the underlying ends of the legs 10 and an upper surface supporting the connecting bridges 18. The base 21 of the insulating support 20 has a plurality of through holes 22, in which some legs 10 are arranged which must pass through the insulating support 20 to be connected to the connecting bridges 18 or to be connected to additional elements (later described) arranged above the connecting bridges 18.

The insulating support 20 comprises a plurality of positioning elements 23, which project downward from the lower surface of the base 21 and fit into interstices between the underlying ends of the legs 10 (as shown in Figure 12) both for ensuring a correct positioning of the insulating support 20 and for mechanically connecting the insulating support 20 to the underlying part of the stator winding 8. In the preferred embodiment shown in the attached figures, the positioning elements 23 are perpendicular to the base 21. The insulating support 20 comprises a plurality of columns 24, which project upward from the upper surface of the base 21 (namely, from the opposite side and in the opposite direction with respect to the positioning elements 23) and provide a mechanical support for additional elements (later described) arranged above the insulating support 20. In the preferred embodiment shown in the attached figures, the columns 24 are circumferentially arranged on both the inner edge and the outer edge of the insulating support 20.

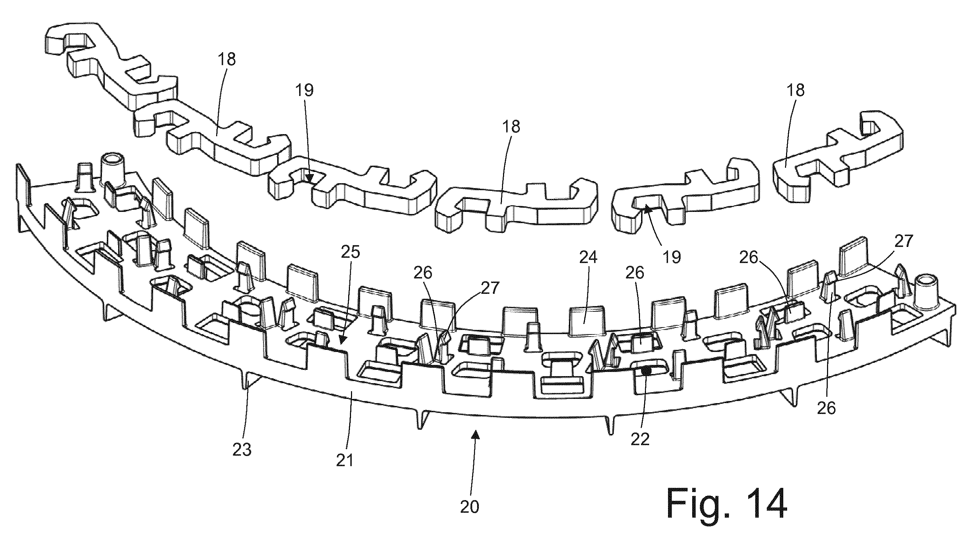

Internally, the insulating support 20 comprises the seats 25 (shown in Figure 14), each of which can house with no substantial clearance and can mechanically lock in the correct position a corresponding connecting bridge 18. Each seat 25 is formed by retaining elements 26 which project upward from the upper surface of the base 21 and are arranged at the edge of the corresponding connecting bridge 18; at least a part of the retaining elements 26 has a tooth 27 resting on the upper surface of the corresponding connecting bridge 18 in response to an elastic deformation of the retaining element 26. In other words, each connecting bridge 18 is forcibly inserted in the corresponding seat 25 to determine an elastic deformation of at least part of the retaining elements 26; consequently, at least part of the retaining elements 26 must be elastically deformed to extract a connecting bridge 18 from the corresponding seat 25.

The use of the insulating support 20 considerably simplifies the coupling of the connecting bridges 18 to the stator winding 8; in particular, the connecting bridges 18 can be pre-assembled (and fitted) in the corresponding seats 25 of the insulating support 20 away from the stator winding 8 and then the insulating support 20 can be coupled in a single operation to all the connecting bridges 18 of the stator winding 8. Moreover, the insulating support 20 stably maintains the connecting bridges 18 in the desired position during the construction of the stator winding 8 (i.e. before tightening the seats 19 of the connecting bridges 18 around the ends of the corresponding legs 10 and before welding the connecting bridges 18 to the ends of the corresponding legs 10).

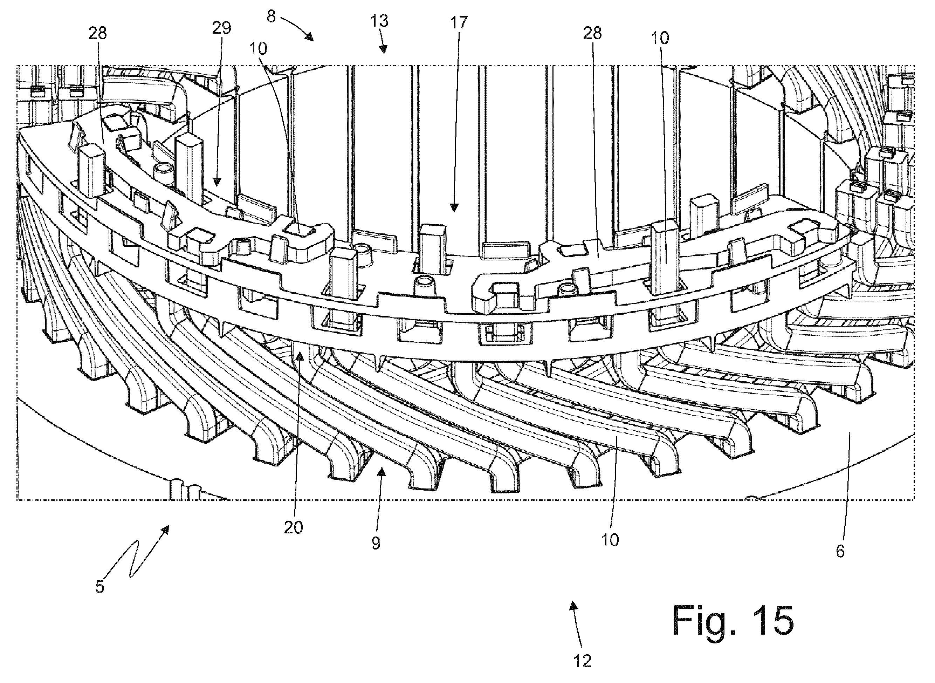

As shown in Figure 15, the three ends of respective legs 10 forming a centre-star of the stator winding 8 are electrically connected by a connecting bridge 28, which is formed by a flat plate, perpendicular to the central axis of rotation 3 of the electric machine 1 and provided with three seats engaging the ends of the respective legs 10. The connecting bridges 28 are similar to the aforesaid connecting bridges 20 and therefore comprise respective seats that are plastically deformed after the insertion of the ends of the corresponding legs 10. As shown in Figure 15, the stator winding 8 shown in the attached figures has two star connections that are in turn connected in parallel (as hereinafter better described). The two connecting bridges 28 are arranged over the six connecting bridges 18. A preferred embodiment shown in the attached figures provides an insulating support 29, which houses the connecting bridges 28, is arranged below the connecting bridges 28, and is quite similar to the insulating support 20.

In particular, the insulating support 29 rests with its bottom on the top of the columns 24 of the insulating support 20. The only substantial difference (with the obvious exception of the shape and arrangement of the seats 25) between the insulating support 29 and the insulating support 20 is that the insulating support 29 lacks the positioning elements 23 as it rests on the columns 24 of the underlying insulating support 20. For the rest, the insulating support 29 comprises a base perforated by through holes just like the insulating support 20, comprises columns just like the insulating support 20 and has seats provided with retaining elements, possibly provided with teeth just like the insulating support 20.

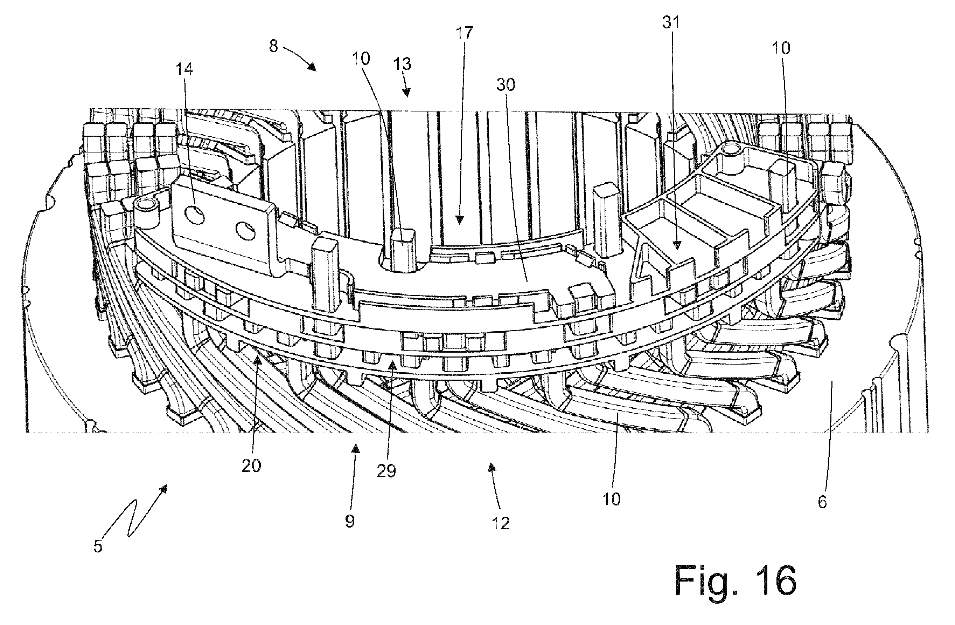

As shown in Figure 16, it is provided a connecting bridge 30, which is provided with a power terminal 14, is arranged above the connecting bridges 28 and is formed by a flat plate which is perpendicular to the central axis of rotation 3 of the electric machine 1 and is provided with two seats engaging the ends of the respective legs 10. The connecting bridge 30 is similar to the connecting bridges 20 described above and therefore comprises respective seats that are plastically deformed after the insertion of the ends of the corresponding legs 10. A preferred embodiment shown in the attached figures provides an insulating support 31, which houses the connecting bridge 30, is arranged below the connecting bridge 30 and is quite similar to the insulating supports 20 and 29. In particular, the insulating support 31 rests with its bottom on the top of the columns of the insulating support 29. The only substantial difference (with the obvious exception of the shape and arrangement of the seats 25) between the insulating support 31 and the insulating support 20 is that the insulating support 31 lacks the positioning elements 23 as it rests on the columns of the underlying insulating support 29. For the rest, the insulating support 31 comprises a base perforated by through holes just like the insulating support 20, comprises columns just like the insulating support 20 and has seats provided with retaining elements, possibly provided with teeth just like the insulating support 20.

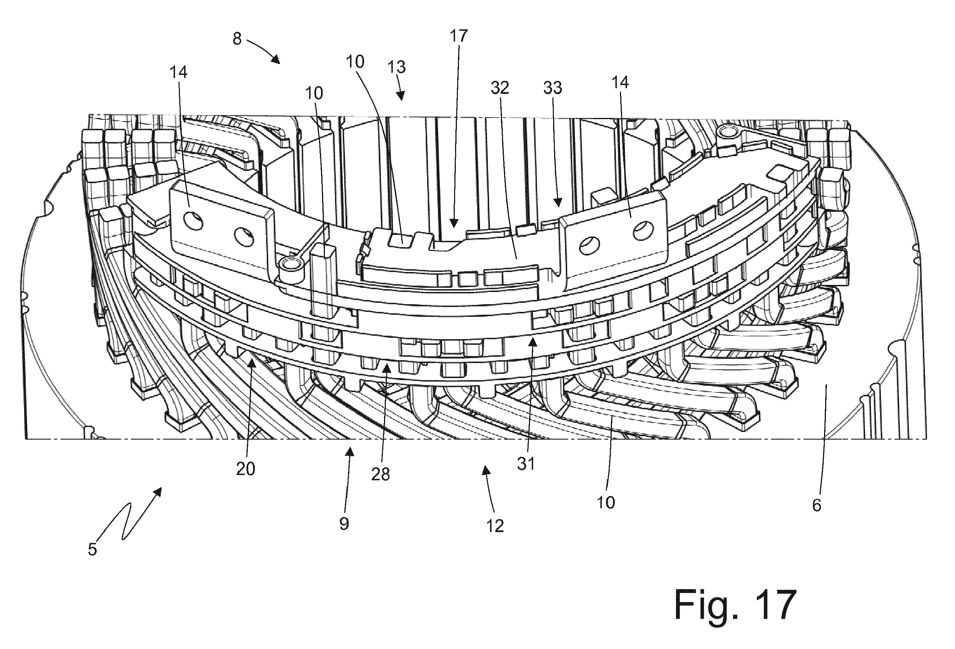

As shown in Figure 17, it is provided a connecting bridge 32, which is provided with a power terminal 14, is arranged above the connecting bridge 30 and is formed by a flat plate which is perpendicular to the central axis of rotation 3 of the electric machine 1 and is provided with two seats engaging the ends of the respective legs 10. The connecting bridge 32 is similar to the connecting bridges 20 described above and therefore comprises respective seats that are plastically deformed after the insertion of the ends of the corresponding legs 10. A preferred embodiment shown in the attached figures provides an insulating support 33 which houses the connecting bridge 32, is arranged below the connecting bridge 32 and is quite similar to the insulating supports 20, 29 and 31. In particular, the insulating support 33 rests with its bottom on the top of the columns of the insulating support 31. The only substantial difference (with the obvious exception of the shape and arrangement of the seats 25) between the insulating support 33 and the insulating support 20 is that the insulating support 33 lacks the positioning elements 23 as it rests on the columns of the underlying insulating support 31. For the rest, the insulating support 33 comprises a base perforated by through holes 20 just like the insulating support, comprises columns just like the insulating support 20 and has seats provided with retaining elements, possibly provided with teeth just like the insulating support 20.

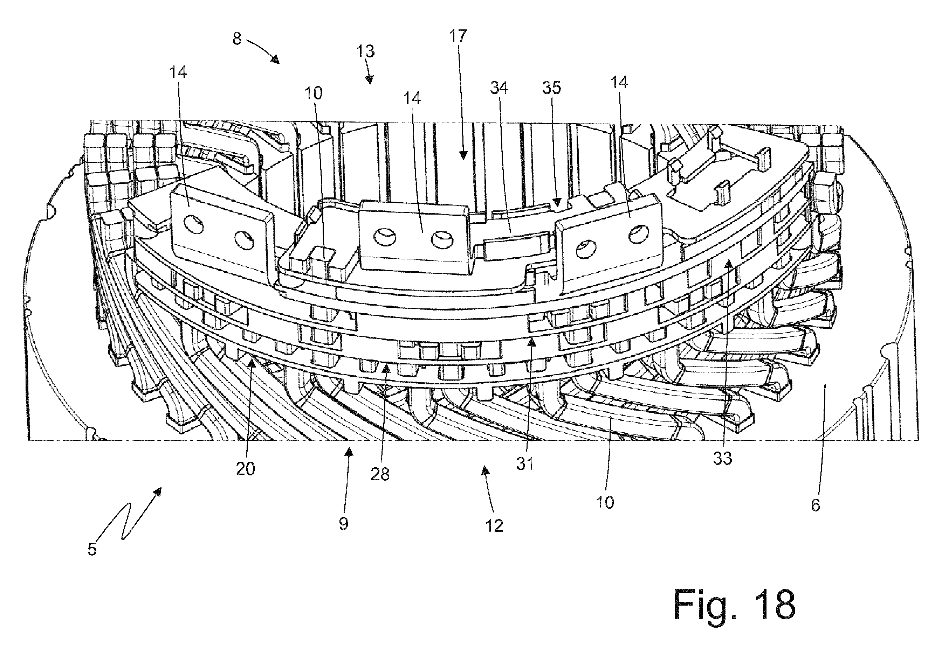

As shown in Figure 18, it is provided a connecting bridge 34, which is provided with a power terminal 14, is arranged above the connecting bridge 32 and is formed by a flat plate which is perpendicular to the central axis of rotation 3 of the electric machine 1 and is provided with two seats engaging the ends of the respective legs 10. The connecting bridge 34 is similar to the connecting bridges 20 described above and therefore comprises respective seats that are plastically deformed after the insertion of the ends of the corresponding legs 10. A preferred embodiment shown in the attached figures provides an insulating support 35, which houses the connecting bridge 34, is arranged below the connecting bridge 34 and is quite similar to the insulating supports 20, 29, 31 and 33. In particular, the insulating support 35 rests with its bottom on the top of the columns of the insulating support 33. The only substantial difference (with the obvious exception of the shape and arrangement of the seats 25) between the insulating support 35 and the insulating support 20 is that the insulating support 35 lacks the positioning elements 23 as it rests on the columns of the underlying insulating support 33. For the rest, the insulating support 35 comprises a base perforated by through holes 20 just like the insulating support 20, comprises columns just like the insulating support 20 and has seats provided with retention elements, possibly provided with teeth just like the insulating support 20.

Thanks to the connecting bridges 30, 32 and 24, each power terminal 14 is electrically connected to the ends of two legs 10 forming respective terminals of a star connection of the stator winding 8 and protruding beyond the corresponding support elements 31, 33 and 35; in this way, the connecting bridges 30, 32 and 24 connect in parallel the two star connections of the stator winding 8.

The embodiment shown in the attached figures uses five connecting bridges 18, 28, 30, 32 and 34 arranged one over the other (i.e. one stacked on the other); according to alternative and completely equivalent embodiments, it can be provided a different number (for example four or six) of connecting bridges.

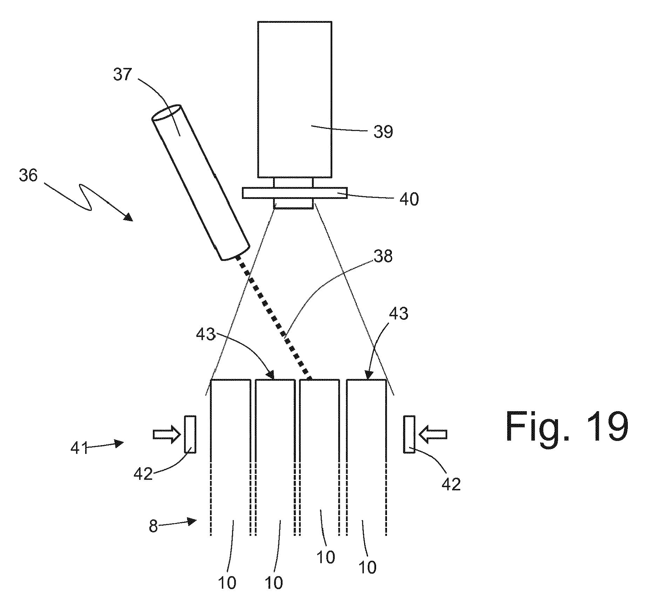

With reference to what shown in Figures 19-25, hereinafter it will be described the procedures used for welding inside the stator winding 8, namely for connecting the legs 10 of the "U"-shaped bars 9 between them or to the connecting bridges 18, 28, 30, 32 and 34. The Figures 19-25 show the welding between the ends of two adjacent legs 10, but also the welding between a leg 10 and a corresponding connecting bridge 18, 28, 30, 32 or 34 follows an analogous procedure. As shown in Figure 19, the welding is performed in a welding station 36 comprising an emitting device 37 which can generate and emit a laser beam 38, which can melt the copper, namely the metal constituting the stator winding 8. The welding station 36 further comprises a camera 39, which can acquire digital images of the elements to be welded together (the legs 10 of the "U"-shaped bars 9 in the embodiment shown in Figure 19). According to a preferred embodiment, the welding station 36 comprises a lighting device 40, which can light up the elements to be welded together (the legs 10 of the "U"-shaped bars 9 in the embodiment shown in Figure 19); preferably, the lighting device 40 has an annular shape, is arranged around the lens of the camera 39 and can emit a red light (which optimizes the vision of the elements to be welded during the welding operation) by means of a LED matrix.

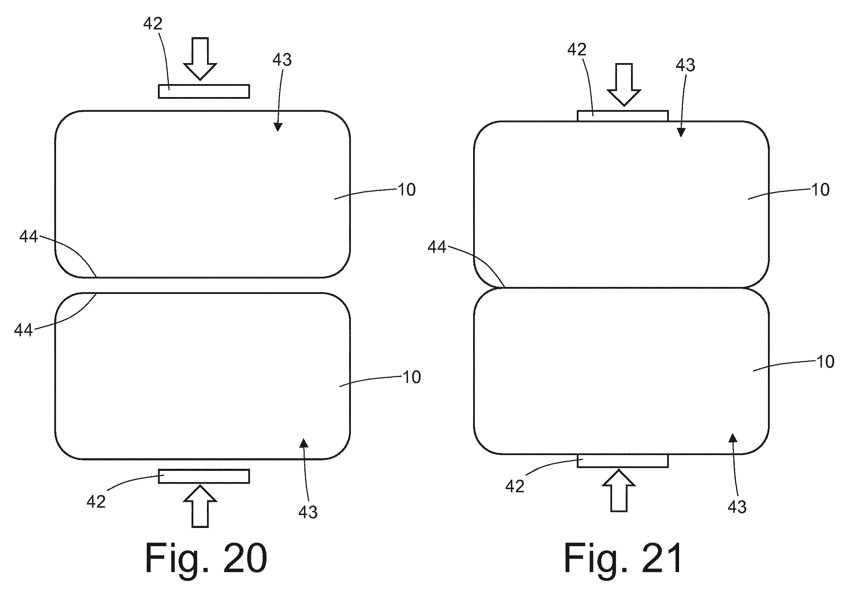

A preferred embodiment shown in Figure 19 provides a compression device 41, which is mechanically coupled to the legs 10 to be welded to push the legs 10 one against the other and then arrange the legs 10 in close mutual contact to promote an optimal electrical connection. The compression device 41 comprises two jaws 42 which are arranged on opposite sides of the group of legs 10 and are mechanically connected to tighten between them the legs 10. Figures 20-25 show the welding of the ends of two adjacent legs 10 in the welding station 36; the two metal elements to be welded, i.e. the two legs 10, are arranged side by side and have respective upper surfaces 43 that are coplanar and have at least one common edge 44.

Initially, and as shown in Figure 20, the two adjacent legs 10 to be welded are pushed toward each other by the jaws 42 of the compression device 41. Figure 20 schematically shows only the two legs 10 to be welded and the jaws 42 are directly pressed against both legs 10, but normally the jaws 42 compress a group of four legs 10, as shown in Figure 19. As shown in Figure 21, the action of the jaws 42 of the compression device 41 brings the two legs 10 in close contact by cancelling any undesired space between the two legs 10 at the common edge 44.

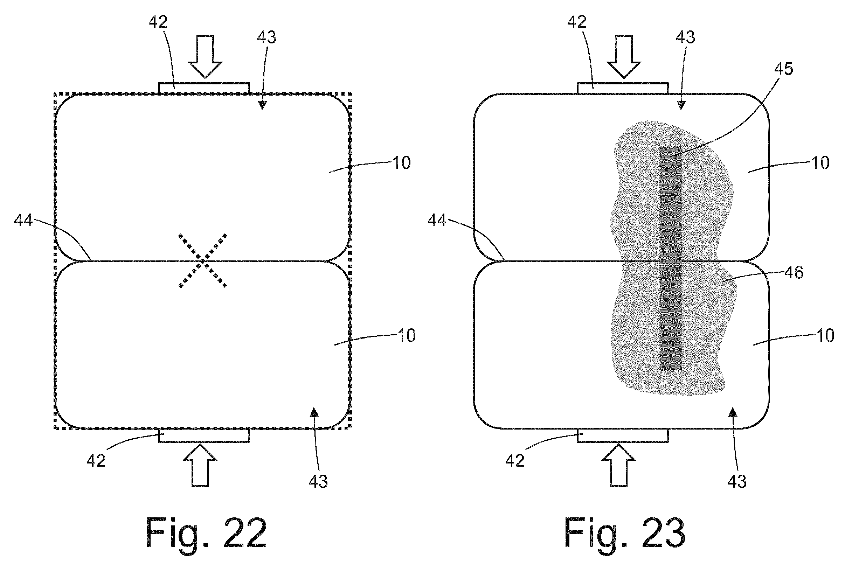

Subsequently and as shown in Figure 22, the camera 39 acquires a digital image of the two upper surfaces 43 of both legs 10. Subsequently, a control unit analyses the digital image to determine the position of the outer edges of the two upper surfaces 43 (highlighted with a dotted line in Figure 22) and to determine the position of the corners of the outer edges of the two upper surfaces 43. By using the position of the corners of the outer edges of the two upper surfaces 43, the control unit determines the position of the centre (namely the centre of gravity) of the two upper surfaces 43 (highlighted with a dotted line in Figure 22). The outer edges of the two upper surfaces 43 and the centre of the two upper surfaces 43 are geometric references that are used by the control unit to control the position of the laser beam 38 (i.e. to control where the laser beam 38 impacts against the two upper surfaces 43). By exploiting the geometric reference obtained from the analysis of the digital image of the two upper surfaces 43 of both legs 10, and as shown in Figure 23, the control unit drives the emitting device 37 to direct to the upper surfaces 43 of the two legs 10 a laser beam 38, which can melt the copper (i.e. the metal forming the legs 10) and is fed along a welding line 45 that is perpendicular to the common edge 44 and crosses the common edge 44. According to a preferred embodiment, the position of the welding line 45 is determined as a function of the position of the centre of the two upper surfaces 43, whereas the orientation of the welding line 45 is determined as a function of the outer edges of the two upper surfaces 43 (in particular, the laser beams 38 are oriented to be parallel to the outer edges of the two upper surfaces 43 that are perpendicular to the common edge 44). The laser beam 38 that draws the welding line 45 on the upper surfaces 43 of the two legs 10 causes the fusion of part of the metal constituting the legs 10, and therefore determines the formation of a bath of molten metal46 which is arranged around the welding line 45.

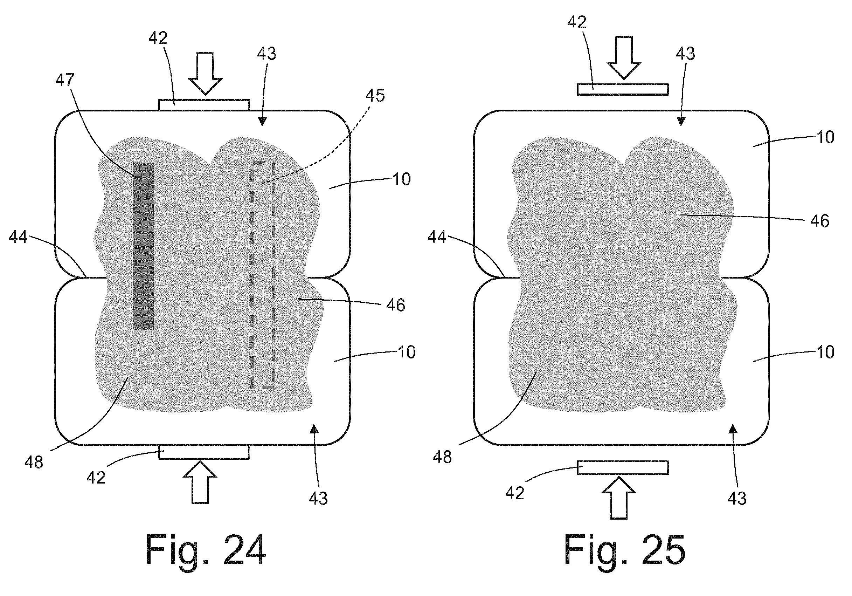

By exploiting the geometric reference obtained from the analysis of the digital image of the two upper surfaces 43 of both legs 10 and as shown in Figure 24, the control unit drives the emitting device 37 to direct to the upper surfaces 43 of the two legs 10 a laser beam 38, which can melt the copper (i.e. the metal forming the legs 10) and is fed along a welding line 47 that is perpendicular to the common edge 44, passes through the common edge 44, is parallel to and spaced from the line 45 and is shorter than the line 45. According to a preferred embodiment, the position of the welding line 47 is determined as a function of the position of the centre of the two upper surfaces 43, while the orientation of the welding line 47 is determined as a function of the outer edges of the two upper surfaces 43 (in particular, the laser beams 38 are oriented to be parallel to the outer edges of the two upper surfaces 43 that are perpendicular to the common edge 44). The laser beam 38 that draws the welding line 47 on the upper surfaces 43 of the two legs 10 causes the fusion of part of the metal constituting the legs 10, and therefore determines the formation of a bath of molten metal 48, which is arranged around the welding line 47 and joins (forming a single bath of molten metal) the previously generated bath of molten metal 46.

The fact that the welding line 47 is shorter than the welding line 45 allows to obtain a well balanced welding, since, even in the presence of a shorter welding line 47, the bath of molten metal 48 has substantially the same volume of the bath of molten metal 46; in fact, the welding line 47 is carried out when the upper surfaces 43 of the two legs 10 have been already heated by the previous welding line 45 and thus, while providing a lower total amount of heat, it substantially allows to melt the same amount of metal. Thanks to a correct balance of the two bath of molten metal 46 and 48 (a correct balance obtained by differentiating the lengths of the two welding lines 45 and 47), it is possible to perform an extended welding (therefore, mechanically strong and with a low electrical resistance) without the risk of molten metal burrs out of the upper surfaces 43 of the two legs 10; such molten metal burrs can be very harmful, since they can cause unwanted and potentially destructive short circuits inside the stator winding 8.

According to a further embodiment not shown, in some cases also a further (third) welding line can be used that is perpendicular to the common edge 44 and passes through the common edge 44, is parallel to and spaced from the welding line 47 and is shorter than the welding line 47.

According to a preferred embodiment, the welding lines 45 and 47 are not mutually centred. In particular, the welding line 45 is symmetrically divided by the common edge 44, while the welding line 47 is asymmetrically divided by the common edge 44; in this way it is possible to further reduce the risk of molten metal burrs out of the upper surfaces 43 of the two legs 10. In the embodiment shown in the attached figures, each welding line 45 and 47 extends from a starting point arranged on a leg 10 to an end point arranged on the other leg 10, the starting points of the two welding lines 45 and 47 are arranged at a same distance from the common edge 44, and the end points of the two welding lines 45 and 47 are arranged at different distances from the common edge 44.

From the above, it is clear that the laser beams 38 producing the two welding lines 45 and 47 are generated in (quick) succession by the only emitting device 37.

As shown in Figure 25, once the two baths of molten metal 46 and 48 have sufficiently cooled, the jaws 42 of the compression device 41 are uncoupled from the legs 10, thus ending the welding operations. During the welding, the jaws 42 of the compression device 41 push and keep pushed the two legs 10 toward each other along a thrust direction perpendicular to the common edge 44. Such thrust is generated before starting the emission of the laser beams 38 and is normally maintained until reaching an at least partial cooling of the baths of molten metal 46 and 48.

According to a preferred embodiment, the two jaws 42 of the compression device 41 have an annular shape, are mounted on the stator winding 8 before starting the welding, and are removed from stator winding 8 at the end of welding. An inner jaw 42 is arranged inside the stator winding 8 in direct contact with the innermost legs 10, and an outer jaw 42 is arranged out of the stator winding 8 in direct contact with the outermost legs 10 to push the outermost legs 10 toward the innermost legs 10, and vice versa.

The laser welding mode has been described, with reference to what is shown in Figures 19-25, for welding the ends of two adjacent legs 10, but a leg 10 and a corresponding connecting bridge 18, 28, 30, 32 or 34 are also analogously welded; in the case of the aforesaid laser welding operating mode, it is not provided the use of a compression device, because the seats 19 of the connecting bridges 18, 28, 30, 32 or 34 are previously plastically deformed to tighten the ends of the corresponding legs 10.

The above described laser welding mode has numerous advantages, since it allows to obtain an effective welding process (i.e. providing a welding which is mechanically strong, has a low electrical resistance and lasts in time), efficient (i.e. having very reduced operation times) and easily processed (i.e. easily automated and accurately executable without special precautions). Furthermore, the above described laser welding mode does not require a prior stripping (i.e. removal of the insulating outer layer) of the final ends of the legs 10 at the upper surfaces 43; in other words, the aforesaid laser welding does not require to strip in advance (i.e. remove the outer insulating layer) the final ends of the legs 10 at the upper surfaces 43.

The electric machine 1 shown in the attached figures is a synchronous electric machine with a permanent magnet rotor, but obviously the electric machine 1 could be of any other type (for example asynchronous and therefore with no permanent magnets in the rotor).

## Claims

1. An electric machine (1) having a central axis (3) of rotation and comprising:
a stator (5) comprising a magnetic core (6) longitudinally crossed by a plurality of stator slots (7); and
a stator winding (8) having a number of phases and comprising a series of rigid bars (9), which are "U"-shaped and are inserted through the stator slots (7) defining an inlet side (12), in which the cusps (11) of the "U"-shaped bars (9) are arranged, and an outlet side (13), in which the legs (10) of the "U"-shaped bars (9) are arranged;
wherein the cusp (11) of each "U"-shaped bar (9) has a three-dimensional fold on two mutually perpendicular planes (A, B);
the electric machine (1) is **characterized in that:**
the cusp (11) of each "U"-shaped bar (9) has a fold that follows a first plane (A), which is substantially parallel to the lying plane defined by the "U"-shaped bar (9) and is "S"-shaped; and
the cusp (11) of each "U"-shaped bar (9) has a further fold that follows a second plane (B), which is substantially perpendicular to the lying plane defined by the "U"-shaped bar (9) and is "U"-shaped.

2. An electric machine (1) according to claim 1, wherein the first plane (A) laterally consists of two portions of cylindrical surface, which are centred on the central axis of rotation (3) of the machine and have different radii.

3. An electric machine (1) according to claim 2, wherein, in the first plane (A), the two portions of cylindrical surface arranged on the sides are centrally joined by a central "S"-shaped portion.

4. An electric machine (1) according to claim 1, 2 or 3, wherein, in each "U"-shaped bar, the two legs (10) are inclined relative to one another and each leg (10) is oriented so as to "face" the central axis of rotation (3) of the electric machine (1).

5. An electric machine (1) according to any one of claims 1 to 4, wherein the three-dimensional fold of the cusp (11) of each bar (9) has no longitudinal twisting, i.e. around a torsion axis parallel to the central longitudinal axis of the bar (9).
